# EUROPÄISCHE PATENTSCHRIFT

(11) **EP 2 018 779 B1**
(45) Veröffentlichungstag und Bekanntmachung des Hinweises auf die Patenterteilung: **02.11.2016**
(21) Anmeldenummer: 07728978.3
(22) Anmeldetag: 10.05.2007
(51) Int. Cl.: H04W 16/02

(54) **ZUORDNUNG VON FREQUENZBEREICHEN FÜR UPLINK- UND DOWNLINK-ÜBERTRAGUNGEN**
ALLOCATION OF FREQUENCY RANGES FOR UPLINK AND DOWNLINK TRANSMISSIONS
ATTRIBUTION DE PLAGES DE FRÉQUENCES POUR DES TRANSMISSIONS DE LIAISON MONTANTES ET DESCENDANTES

(30) Priorität: 18.05.2006 DE 102006023640
(43) Veröffentlichungstag der Anmeldung: 28.01.2009
(73) Patentinhaber: Vodafone Holding GmbH, 40213 Düsseldorf (DE)
(72) Erfinder: FETTWEIS, Gerhard, 01326 Dresden (DE)
(74) Vertreter: Ring & Weisbrodt
(86) Internationale Anmeldenummer: PCT/EP2007/054526
(87) Internationale Veröffentlichungsnummer: WO 2007/134976

(56) Entgegenhaltungen:
- EP-A2- 0 523 687
- US-A1- 2003 078 040
- KIM W S ET AL: "ENHANCED CAPACITY IN CDMA SYSTEMS WITH ALTERNATE FREQUENCY PLANNING", ICC '98. 1998 IEEE INTERNATIONAL CONFERENCE ON COMMUNICATIONS. CONFERENCE RECORD. NEW CENTURY COMMUNICATIONS. ATLANTA, GA, JUNE 7 - 11, 1998; [IEEE INTERNATIONAL CONFERENCE ON COMMUNICATIONS], NEW YORK, NY : IEEE, US, vol. CONF. 5, 7 June 1998 (1998-06-07), pages 973-978, XP000891017, ISBN: 978-0-7803-4789-2

## Beschreibung

### Technisches Gebiet

Die Erfindung betrifft ein Mobilfunknetz, insbesondere nach dem GSM- und/oder dem UMTS-Standard, zur Kommunikation von Mobilfunkendgeräten, enthaltend wenigstens zwei Basisstationen mit Antennen zum Empfangen und/oder Senden von Uplink- und/oder Downlink-Übertragungen, wobei der Abdeckungsbereich einer Basisstation wenigstens eine Funkzelle bildet, in der für die Uplink- und die Downlink-Übertragung Frequenzbereiche vorgesehen sind. Ferner betrifft die Erfindung ein Verfahren für Mobilfunknetze, insbesondere nach dem GSM- und/oder dem UMTS-Standard, zur Kommunikation von Mobilfunkendgeräten, enthaltend wenigstens zwei Basisstationen jeweils mit wenigstens einer Antenne zum Empfangen und/oder Senden von Uplink- und/oder Downlink-Übertragungen, wobei der Abdeckungsbereich einer Basisstation eine Funkzelle bildet, in der für die Uplink- und die Downlink-Übertragung Frequenzbereiche vorgesehen sind.

### Stand der Technik

Ein Mobilfunknetz besteht in der Regel aus Basisstationen, deren zugeordneten Funkzellen in Illustration meist als hexagonale Struktur dargestellt werden. Die räumliche Ausdehnung jeweils einer Funkzelle wird durch den Abdeckungsbereich der Basisstationen gebildet, mit der ein Mobilfunkendgerät Kontakt aufnimmt. Jede Basisstation versorgt in der Regel dazu mit drei zueinander horizontal um 120° gedrehten Antennen drei Funkzellen. Jede der drei Antennen einer Basisstation strahlt somit eine etwa 120° breite "Sendekeule" aus. Diese Anordnung der Funkzellen eines Mobilfunksystems wird auch als "Kleeblattmodel" bezeichnet. Aufgrund der genannten Antennen-Anordnung werden pro Basisstationen meist unterschiedliche Signale in drei verschiedene Richtungen ausgestrahlt. Jede Basisstation bedient somit drei Funkzellen.

Die einfachste Form der Frequenzbereichs-Zuordnung besteht darin, nur einen Frequenzbereich in allen Sektoren des Netzwerkes wieder zu verwenden. Dies würde jedoch zu einer starken Interferenz führen.

Es sind Konzepte für Mobilfunknetze bekannt, bei denen den Funkzellen verschiedene Frequenzbereiche zugeordnet werden, um Interferenzen zu verringern. Diese werden üblicherweise danach klassifiziert, wie viele verschiedene Frequenzbereiche insgesamt verwendet werden, der sogenannte Wiederholfaktor, auch "Reuse-Faktor" genannt. Üblich ist es dabei einen Wiederholfaktor von "3" und "7" zu verwenden.

Der Abstand zwischen zwei Funkzellen, die den gleichen Frequenzbereich verwenden, wird hierdurch vergrößert. Dadurch werden Interferenzen verringert. Der wesentliche Nachteil ist, dass nun drei- bzw. siebenmal so viele Frequenzbereiche benötigt werden, um die gleiche Anzahl von Endgeräten zu bedienen.

Trotz der unterschiedlichen Wiederholfaktoren arbeiten viele der herkömmlichen Verfahren nach dem Prinzip, dass für das Übertragen von Daten von einer Basisstation zu einem Endgerät oder in die andere Richtung zwei verschiedene Frequenzbereiche verwendet werden. Dementsprechend sind bei einem Wiederholfaktor von "3" insgesamt sechs Frequenzbereiche für die Kommunikation erforderlich. Sowohl die Daten, die zur Basisstation gesendet werden, dem "Uplink", als auch die Daten, welche von der Basisstation gesendet werden, dem "Downlink", benötigen jeweils einen separaten Frequenzbereich. Alle bekannten Mobilfunknetze beruhen darauf, dass für Uplink- und Downlink-Übertragungen jeweils unterschiedliche Frequenzen oder Zeitbereiche verwendet werden. Dies führt generell dazu, dass das System insgesamt eine schlechte spektrale Effizienz aufweist. Es schränkt dadurch die Kapazität bei Mobilfunknetzen ein, da hier immer zwei Frequenz- bzw. Zeitbereiche für eine Verbindung zwischen Basisstation und Mobilfunkendgerät bereitgestellt werden müssen.

Die EP 0 523 687 A2 offenbart ein mobiles Telekommunikationssystem welches aus einer Basisstation und mehreren Relaisstationen besteht. Dabei ist die Basisstation mit einem öffentlichen Netzwerk verbunden und weist eine nicht-direktionale Sende- und/oder Empfangsantenne zur Kommunikation mit sich in dem Abdeckungsbereich der Basisstation befindenden mobilen Endgeräten auf. Zur Erweiterung des Einsatzbereiches der Basisstation empfängt eine entfernt von der Basisstation angeordnete erste Relaisstation mittels einer direktionalen Antenne Signale, welche von der nicht-direktionalen Antenne der Basisstation gesendet werden. Die erste Relaisstation verfügt ebenfalls über eine nicht-direktionale Antenne, über welche sowohl eine Kommunikation mit sich in dem Abdeckungsbereich der ersten Relaisstation befindenden mobilen Endgeräten als auch eine Kommunikation mit einer weiteren Relaisstation, welche von der Basisstation weiter entfernt ist als die erste Relaisstation, möglich ist. Dabei sieht die EP 0 523 687 A2 identische Frequenzbereiche für den Uplink und identische Frequenzbereiche für den Downlink vor.

Die US 2003/0078040 A1 offenbart ein Kommunikationssystem, in welchem ein definierter Frequenzbereich sowohl für die terrestrische Kommunikation als auch für die Satellitenkommunikation genutzt wird. Dabei wird ein erster Frequenzbereich für den Uplink von einem Endgerät eines terrestrischen Kommunikationssystems zu einer Funkzelle des terrestrischen Kommunikationssystems als auch für den Downlink eines Satelliten eines Satellitenkommunikationssystems zu einem Nutzer des Satellitenkommunikationssystems genutzt. Ein zweiter Frequenzbereich wird hingegen für den Downlink von der Funkzelle des terrestrischen Kommunikationssystems zu einem Endgerät des terrestrischen Kommunikationssystems sowie für den Uplink eines Nutzers des Satellitenkommunikationssystems zu dem Satelliten des Satellitenkommunikationssystems genutzt.

Die Veröffentlichung "Enhanced Capacity in CDMA Systems with Alternate Frequency Planning" von Won S. Kim et al (IEEE; 7. Juni 1998; Seiten 973 bis 978; ISBN: 978-0-7803-4789-2) offenbart sogenannte "frequency planning schemes" für CDMA-Systeme, mit denen die Kapazität von CDMA-Systemen verbesserbar ist. Hierzu wird vorgeschlagen, einen Re-Use Faktor von 3 zu verwenden, so dass benachbarte Funkzellen jeweils voneinander unterschiedliche Frequenzbereiche zur Übertragung verwenden, wobei bestimmt durch den Re-Use Faktor von 3 insgesamt drei verschiedene Träger zur Verfügung stehen. Alternativ ist vorgesehen, einzelne Funkzellen in unterschiedliche Bereiche zu partitionieren, in einen sogenannten inneren Bereich und einen äußeren Bereich, wobei die sich im äußeren Bereich befindenden Funkzellen zur Übertragung mit Mobilfunkendgeräten einen Träger mit einem Re-Use Faktor von 3 und in die sich im inneren Bereich befindenden Funkzellen die übrigen freien Träger verwenden, welche sich von den Trägern der äußeren Bereiche unterscheiden.

### Offenbarung der Erfindung

Aufgabe der Erfindung ist es, die Nachteile des Standes der Technik zu beseitigen und die Effizienz eines Mobilfunknetzes zu steigern und dessen Kapazität zu erhöhen. Erfindungsgemäß wird die Aufgabe dadurch gelöst, dass bei einem Mobilfunknetz, insbesondere nach dem GSM- und/oder dem UMTS-Standard, zur Kommunikation von Mobilfunkendgeräten der eingangs genannten Art, jeweils für die Uplink-Übertragung zwischen Mobilfunkendgerät und Basisstation identische Frequenzbereiche der Downlink-Übertragung einer benachbarten Funkzelle vorgesehen sind.

Ferner wird die Aufgabe dadurch gelöst, dass bei einem Mobilfunknetz, insbesondere nach dem GSM- und/oder dem UMTS-Standard, zur Kommunikation von Mobilfunkendgeräten der eingangs genannten Art, jeweils für die Downlink-Übertragung zwischen Mobilfunkendgerät und Basisstation identische Frequenzbereiche der Uplink-Übertragung einer benachbarten Funkzelle vorgesehen sind.

Weiterhin wird die Aufgabe durch ein Verfahren für Mobilfunknetze der eingangs genannten Art gelöst, bei dem für die Uplink-Übertragung bzw. die Downlink-Übertragung zwischen Mobilfunkendgerät und Basisstation jeweils identische Frequenzbereiche der Downlink-Übertragung bzw. Uplinkübertragung einer benachbarten Funkzelle zugewiesen werden.

Die Erfindung besteht darin, das Paradigma getrennter Frequenz- oder Zeitbereiche für Uplink- und Downlinkübertragung aufzugeben, und Frequenz bzw. Zeitbereiche, die in einer Funkzelle im "Uplink" verwendet werden, in benachbarten Funkzellen im "Downlink" zu verwenden. Im Fall eines Wierderholungsfaktors "3" werden somit insgesamt drei Frequenzbereiche für Uplink-Übertragungen und "Downlink"-Übertragung verwendet. Somit ist die spektrale Effizienz gegenüber dem Wiederholfaktor "3" gegenüber dem Stand der Technik verdoppelt.

Durch die Verwendung einer geringeren Anzahl von Frequenzbereichen ist das Interferenzverhalten des Mobilfunknetzes nun jedoch stärker ausgeprägt. Vorteilhaft ist jedoch, dass die Basisstationen und Mobilfunkendgeräte nun eine geringe Anzahl starker Interferenzsignale empfangen, die mit geeigneten Filtern entfernt werden können. Vorteilhafterweise sind daher Filtermittel zum Entfernen von Störsignalen in dem Mobilfunkendgerät vorgesehen. Die Filtermittel verwenden dabei Verfahren, die eine geringe Anzahl starker Interferenzsignale aus dem empfangenen Signal herausrechnen können. Starke Interferenzsignale sind hierbei Signale, die mit einer ähnlichen oder leicht geringeren Intensität empfangen werden, wie die gewünschten Signale.

Die vorliegende Erfindung führt zu einer erhöhten Interferenz, verdoppelt jedoch auch gleichzeitig die Wiederverwendung von Frequenzbereichen im gesamten Mobilfunknetz. Da jedoch die durchschnittliche Interferenz, die an einer Basisstation oder an einem Endgerät auftritt, meist von starken, aus unmittelbar benachbarten Sektoren stammenden, Signalen dominiert wird, können hier Filtermechanismen verwendet werden, die diese ungewünschten Signale recht zuverlässig herausfiltern. Somit wird die Datenübertragung zwischen einer Basisstation und einem Endgerät nur geringfügig beeinträchtigt, während die im Mobilfunknetz zur Verfügung stehenden Frequenzbereiche doppelt so effizient wieder verwendet werden. Hieraus resultiert eine spektrale Effizienz im gesamten System, die signifikant höher ist als bei herkömmlichen Frequenzbereichs-Zuordnungs-Verfahren. Die Erfindung kann mit allen herkömmlichen Zuordnungs-Konzepten kombiniert werden.

### Kurze Beschreibung der Zeichnung

- Fig. 1: zeigt in einer Prinzipskizze eine hexagonale Struktur eines Mobilfunknetzes, bei dem ein Wiederholungsfaktor von "1" vorgesehen ist.
- Fig. 2: zeigt in einer Prinzipskizze eine hexagonale Struktur eines Mobilfunknetzes, bei dem ein Wiederholungsfaktor von "3" für die Frequenzzuordnung vorgesehen ist.
- Fig.3: zeigt in einer Prinzipskizze eine hexagonale Struktur eines Mobilfunknetzes, bei dem ein Wiederholungsfaktor von "7" für die Frequenzzuordnung vorgesehen ist.
- Fig. 4: zeigt in einer Prinzipskizze eine hexagonale Struktur eines erfindungsgemäßen Mobilfunknetzes, bei dem die Frequenz für die UplinkÜbertragung einer Funkzelle der Frequenz der Downlink-Übertragung der jeweiligen benachbarten Funkzellen entspricht.

### Bevorzugtes Ausführungsbeispiel

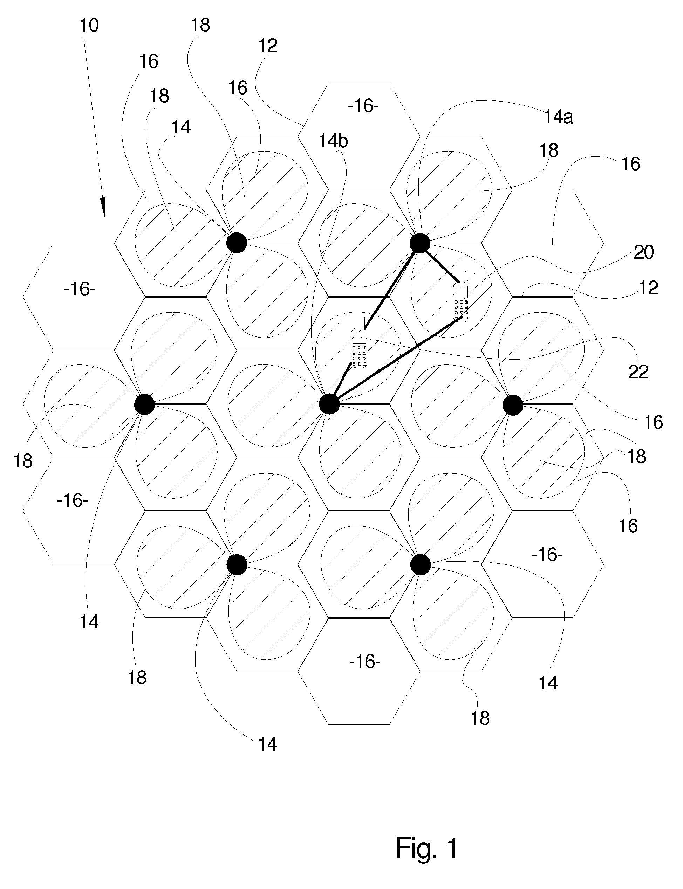

In Fig. 1 wird mit 10 ein Mobilfunknetz bezeichnet. Das Mobilfunknetz 10 besteht aus einer hexagonalen Struktur 12. In der hexagonalen Struktur 12 sind Basisstationen 14 angeordnet. Die Basisstationen 14 sind als schwarze Punkte dargestellt. Jede Basisstation 14 versorgt dazu mit drei zueinander horizontal um 120° gedrehten Antennen drei Funkzellen 16. Jede der drei Antennen einer Basisstation 14 strahlt somit eine etwa 120° breite "Sendekeule" 18 aus. Diese Anordnung der Funkzellen 16 eines Mobilfunknetzes 10 wird auch als "Kleeblattmodel" bezeichnet.

Aufgrund der genannten Antennen-Muster werden pro Basisstation 14 meist unterschiedliche Signale in drei verschiedene Richtungen ausgestrahlt. Jede Basisstation 14 bedient somit drei Funkzellen 16, in der Abbildung als Sechsecke dargestellt. Im vorliegenden Ausführungsbeispiel werden allen Funkzellen 16 die gleichen Frequenzbereiche zugeordnet. Der Wiederholungsfaktor des Frequenzbereiches liegt demnach bei " 1 ". In die hexagonale Struktur 12 sind zwei Mobilfunkendgeräte 20, 22 beispielhaft eingezeichnet. Die beiden Mobilfunkendgeräte 20, 22 erhalten bei einer solchen Anordnung interferierende Signale von Basisstationen 14a und 14b, da bei einem Wiederholfaktor von "1" immer derselbe Frequenzbereich gewählt ist.

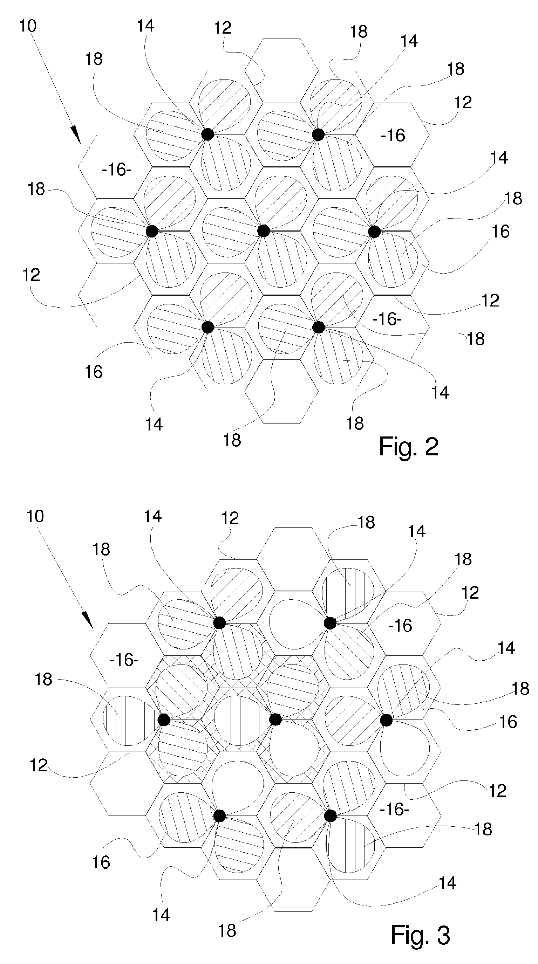

Es sind auch Mobilfunknetze 10 mit anderen Wiederholfaktoren gebräuchlich. In Fig. 2 wird ein Mobilfunknetz 10 mit einem Wiederholfaktor "3" verwendet. Trotz der unterschiedlichen Wiederholfaktoren arbeiten alle herkömmlichen Mobilfunknetze 10 nach dem Prinzip, dass für das Übertragen von Daten von einer Basisstation 14 zu einem Mobilfunkendgerät 20, 22 oder in die andere Richtung zwei verschiedene Frequenzbereiche oder Zeitbereiche verwendet werden. Denn jeweils für jede Uplink-Übertragung und für jede Downlink-Übertragung einer Funkzelle 16 wird ein eigener Frequenz bzw. Zeitbereich benötigt. Dort werden somit insgesamt wenigstens sechs unterschiedliche Frequenz bzw. Zeitbereiche benötigt. Die Basisstationen 14 sind wieder als schwarze Punkte dargestellt. Jede Basisstation 14 versorgt dazu mit drei zueinander horizontal um 120° gedrehten Antennen drei Funkzellen 16. Jede der drei Antennen einer Basisstation 14 strahlt somit eine etwa 120° breite "Sendekeule" 18 aus. Die Sendekeulen 18 sind entsprechend für ihren Wiederholfaktor mit drei unterschiedlichen Schraffuren dargestellt.

Fig. 3 stellt ein ebenfalls häufig im Stand der Technik benutztes Mobilfunknetz 10 dar, welches mit einem Wiederholfaktor "7" betrieben wird. Um die Interferenzen zu vermeiden werden den Funkzellen 16 sieben unterschiedliche Frequenbereiche zur Verfügung gestellt. Die unterschiedlichen Frequenzbereiche werden zur Verdeutlichung schraffiert dargestellt. Insgesamt werden somit bei einem solchen System vierzehn Frequenzbereiche den Funkzellen 16 zugeordnet, da jeweils für die Uplink-Übertragung als auch für die Downlink-Übertragung ein eigener Frequenzbereich benötigt wird. Die Frequenzbereichszuordnung wird dabei so vorgenommen, dass identische Frequenzbereiche möglichst einen maximalen Abstand voneinander haben, um eine Beeinträchtigung der Übertragungsqualität durch Interferenz zu verringern.

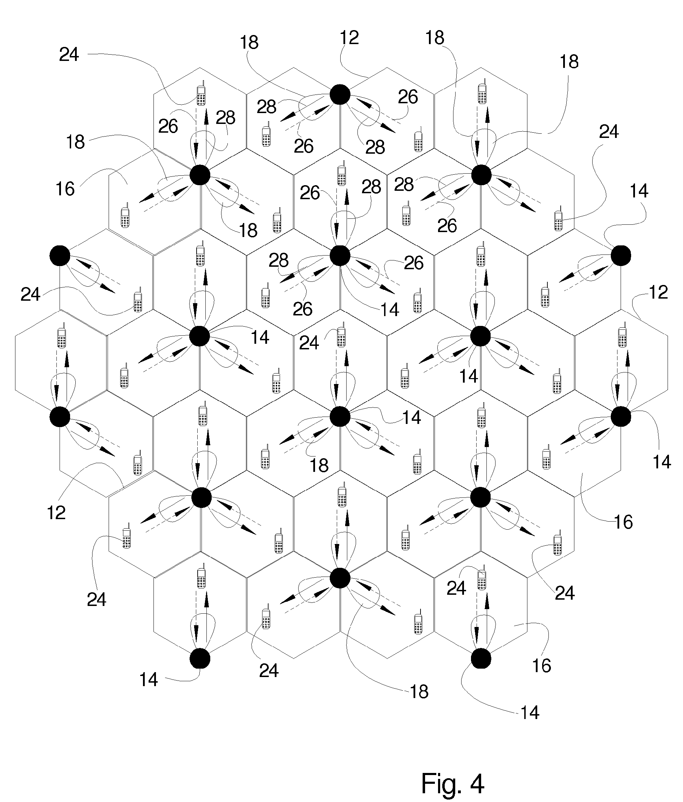

In Fig. 4 ist das Mobilfunknetz 10 in der hexagonalen Struktur 12 zu sehen. Die Basisstationen 14 sind wiederum als schwarze Punkte in dieser hexagonalen Struktur 12 dargestellt. Mobilfunkendgeräte 24 sind in der hexagonalen Struktur beispielhaft angeordnet. Die Mobilfunkendgeräte 24 kommunizieren mit ihrer jeweils zugeordneten Basisstation 14 im Uplink- und Downlink-Modus. Die Uplink-Übertragungen, d.h. die Daten, die von dem Mobilfunkendgerät 24 zur Basisstation 14 gesandt werden, sind als gestrichelte Pfeile 26 dargestellt. Die Downlink-Übertragungen, d.h. die Daten, die von der Basisstation 14 jeweils in Richtung an das Mobilfunkendgerät 24 gesandt werden, sind als durchgezogene Pfeile 28 dargestellt. Das Mobilfunknetz 10, wird je nach Bedarf mit einem beliebigen Wiederholfaktor, z.B. "3" oder "7", wie es zu den Fig. 2 und 3 erläutert wurde, betrieben.

Zur Reduzierung des Ressourcenverbrauchs werden die Frequenzbereiche, welche für die Uplink-Übertragung 26 verwendet werden, dem Frequenzbereich der Downlink-Übertragung 28 jeweils wenigstens einer benachbarten Funkzelle zugeordnet. Entsprechend kann auch das System umgekehrt verwendet werden. Der Downlink-Übertragung 28 wird dann der Frequenzbereich der Uplink-Übertragung 26 wenigstens einer benachbarten Funkzelle zugeordnet.

Auf diese Weise werden die benötigten Frequenzbereiche fast halbiert oder anders ausgedrückt: die Kapazität fast verdoppelt. Störende Interferenzen werden dabei durch geeignete Filtermittel herausgefiltert. Die Filtermittel sind dabei je nach Bedarf entweder im Mobilfunkendgerät 24 oder in bzw. bei den Basisstation 14 angeordnet. Die Filtermittel können leichter "starke Störsignale" mit bekannten Signalmuster herausfiltern als schwache Störsignale mit unbekannten Signalmuster. "Starke Störsignale" sind in diesem Fall Signale, die mit einer ähnlichen oder leicht geringeren Intensität empfangen werden als die gewünschten Signale.

## Patentansprüche

1. Mobilfunknetz (10), insbesondere nach dem GSM- und/oder dem UMTS-Standard,
zur Kommunikation von Mobilfunkendgeräten (20, 22, 24), enthaltend wenigstens zwei Basisstationen (14) jeweils mit wenigstens einer Antenne zum Empfangen und/oder Senden von Uplink- (26) und/oder Downlink-Übertragungen (28), wobei der Abdeckungsbereich einer Basisstation (14) wenigstens eine Funkzelle (16) bildet, in der für die Uplink- (26) und die Downlink-Übertragung (28) Frequenzbereiche vorgesehen sind,
**dadurch gekennzeichnet, dass**
jeweils für die Uplink-Übertragung (26) zwischen Mobilfunkendgerät (20, 22, 24) und Basisstation (14) identische Frequenzbereiche der Downlink-Übertragung (28) einer benachbarten Funkzelle (16) und/oder
jeweils für die Downlink-Übertragung (28) zwischen Mobilfunkendgerät (20, 22, 24) und Basisstation (14) identische Frequenzbereiche der Uplink-Übertragung (26) einer benachbarten Funkzelle (16) vorgesehen sind.

2. Mobilfunknetz (10), nach Anspruch 1, **dadurch gekennzeichnet, dass** die Mobilfunkendgeräte (20, 22, 24) jeweils Filtermittel zum Entfernen von Störsignalen enthalten.

3. Mobilfunkendgerät (20, 22, 24) für ein Mobilfunknetz (10), gemäß Anspruch 1 oder Anspruch 2, **gekennzeichnet durch** Filtermittel zum Entfernen von Störsignalen.

4. Verfahren für Mobilfunknetze (10), insbesondere nach dem GSM-Standard, zur Kommunikation von Mobilfunkendgeräten (20, 22, 24), enthaltend wenigstens zwei Basisstationen (14) mit Antennen zum Empfangen und/oder Senden von Uplink- (26) und/oder Downlink-Übertragungen (28), wobei der Abdeckungsbereich einer Basisstation (14) eine Funkzelle (16) bildet, in der für die Uplink- (26) und die Downlink-Übertragung (28) Frequenzbereiche vorgesehen sind,
**dadurch gekennzeichnet, dass**
für die Uplink-Übertragung (26) zwischen Mobilfunkendgerät (20, 22, 24) und Basisstation (14) identische Frequenzbereiche der Downlink-Übertragung (28) einer benachbarten Funkzelle (16) und/oder
für die Downlink-Übertragung (28) zwischen Mobilfunkendgerät (20, 22, 24) und Basisstation (14) identische Frequenzbereiche der Uplink-Übertragung (26) einer benachbarten Funkzelle (16) zugewiesen werden.

## Claims

1. A mobile radio network (10), in particular according to the GSM and/or UMTS standard,
for the communication of mobile terminals (20, 22, 24), comprising at least two base stations (14) respectively comprising at least one antenna for receiving and/or sending uplink (26) and/or downlink transmissions (28), wherein the area covered by a base station (14) at least forms one radio cell (16), in which frequency ranges for the uplink (26) and the downlink transmission (28) are provided,
**characterized in that**
identical frequency ranges of the downlink transmission (28) of an adjacent radio cell (16) are respectively provided for the uplink transmission (26) between the mobile terminal (20, 22, 24) and the base station (14) and/or identical frequency ranges of the uplink transmission (26) of an adjacent radio cell (16) are respectively provided for the downlink transmission (28) between the mobile terminal (20, 22, 24) and the base station (14).

2. A mobile radio network (10) according to claim 1, **characterized in that** the mobile terminals (20, 22, 24) respectively comprise filtration means for eliminating interfering signals.

3. A mobile terminal (20, 22, 24) for a mobile radio network (10) according to claim 1 or claim 2, **characterized by** filtration means for eliminating interfering signals.

4. A method for mobile radio networks (10), in particular according to the GSM standard, for the communication of mobile terminals (20, 22, 24), comprising at least two base stations (14) with antennas for receiving and/or sending uplink (26) and/or downlink transmissions (28), wherein the area covered by a base station (14) forms a radio cell (16), in which frequency ranges for the uplink (26) and the downlink transmission (28) are provided,
**characterized in that**
identical frequency ranges of the downlink transmission (28) of an adjacent radio cell (16) are allocated for the uplink transmission (26) between the mobile terminal (20, 22, 24) and the base station (14) and/or
identical frequency ranges of the uplink transmission (26) of an adjacent radio cell (16) are allocated for the downlink transmission (28) between the mobile terminal (20, 22, 24) and the base station (14).

## Revendications

1. Réseau radio mobile (10), notamment selon le standard GSM et/ou UMTS, pour la communication des terminaux mobiles (20, 22, 24), comprenant au moins deux stations de base (14) qui comprennent chacune une antenne pour recevoir et/ou émettre des transmissions de liaison montante (26) et/ou de liaison descendante (28), la zone de couverture d'une station de base (14) formant au moins une cellule de radio (16), dans laquelle des plages de fréquences sont prévues pour la transmission de liaisons montantes (26) et de liaisons descendantes (28),
**caractérisé en ce que**
des plages de fréquences identiques de la transmission de liaisons descendantes (28) d'une cellule de radio adjacente (16) sont respectivement prévues pour la transmission de liaisons montantes (26) entre le terminal mobile (20, 22, 24) et la station de base (14) et/ou
des plages de fréquences identiques de la transmission de liaisons montantes (26) d'une cellule de radio adjacente (16) sont respectivement prévues pour la transmission de liaisons descendantes (28) entre le terminal mobile (20, 22, 24) et la station de base (14).

2. Réseau radio mobile (10) selon la revendication 1, **caractérisé en ce que** les terminaux mobiles (20, 22, 24) comprennent chacun des moyens de filtration pour éliminer des signaux d'interférence.

3. Terminal mobile (20, 22, 24) pour un réseau radio mobile (10) selon la revendication 1 ou la revendication 2, **caractérisé par** des moyens de filtration pour éliminer des signaux d'interférence.

4. Procédé destiné aux réseaux radio mobile (10), notamment selon le standard GSM, pour la communication des terminaux mobiles (20, 22, 24), comprenant au moins deux stations de base (14) qui comprennent chacune une antenne pour recevoir et/ou émettre des transmissions de liaison montante (26) et/ou de liaison descendante (28), la zone de couverture d'une station de base (14) formant une cellule de radio (16), dans laquelle des plages de fréquences sont prévues pour la transmission de liaisons montantes (26) et de liaisons descendantes (28),
**caractérisé en ce que**
des plages de fréquences identiques de la transmission de liaisons descendantes (28) d'une cellule de radio adjacente (16) sont attribuées pour la transmission de liaisons montantes (26) entre le terminal mobile (20, 22, 24) et la station de base (14) et/ou
des plages de fréquences identiques de la transmission de liaisons montantes (26) d'une cellule de radio adjacente (16) sont attribuées pour la transmission de liaisons descendantes (28) entre le terminal mobile (20, 22, 24) et la station de base (14).
